# EUROPÄISCHE PATENTSCHRIFT

(11) **EP 2 764 993 B1**
(45) Veröffentlichungstag und Bekanntmachung des Hinweises auf die Patenterteilung: **02.09.2020**
(21) Anmeldenummer: 13197595.5
(22) Anmeldetag: 17.12.2013
(51) Int. Cl.: B32B 5/02, D04H 1/54, D03D 15/00, D01F 8/04, D01F 8/14

(54) **Mehrschichtiger Artikel, insbesondere Faltenbalg, enthaltend wenigstens ein textiles Flächengebilde**
Multilayer item, in particular bellows, comprising at least one textile surface
Article multicouches, notamment soufflet, contenant au moins une couche textile

(30) Priorität: 07.02.2013 DE 102013101201
(43) Veröffentlichungstag der Anmeldung: 13.08.2014
(73) Patentinhaber: ContiTech Elastomer-Beschichtungen GmbH, 30165 Hannover (DE)
(72) Erfinder: Lindenthal, Gabriele, 37154 Northeim (DE)
(74) Vertreter: Preusser, Andrea

(56) Entgegenhaltungen:
- EP-A1- 2 492 390

## Beschreibung

Die Erfindung betrifft einen mehrschichtigen Artikel, insbesondere einen Faltenbalg, der wenigstens ein textiles Flächengebilde enthält.

Derartige mehrschichtige Artikel auf der Basis von Verbundwerkstoffen sind beispielsweise flexible Behälter, Schutzanzüge, Rettungsinseln, schlauchförmige Körper, insbesondere Schläuche und Luftfederbälge, Antriebsriemen, Drucktücher, Fördergurte und Faltenbälge.
Faltenbälge für Gelenkfahrzeuge dienen als Übergangsschutz zwischen den einzelnen, gelenkig miteinander gekuppelten Fahrzeugteilen. Sie sind röhren- oder tunnelförmig und bestehen im Wesentlichen aus einem mit einem Polymer beschichteten textilen Flächengebilde. Für Bekleidungsstücke ist z. Bsp. aus EP2 492 390 A1 bekannt, Polyesterfasern mit einem wasserabweisenden Agens zu behandeln, um verbesserte antibakterielle und deodorisierende Eigenschaften zu erhalten. Allerdings werden hier keine mehrschichtigen Artikel wie Faltenbälge, etc. offenbart.

Bisher werden für steife Textilstrukturen, wie sie bspw. in Faltenbälgen benötigt werden, textile Flächengebilde auf der Basis von Monofilen eingesetzt. Auch in Fördergurten und anderen mehrschichtigen Artikeln, werden Monofile eingesetzt, deren Aufgabe es ist, Trägermaterialien in beide Richtungen, d.h. längs und / oder quer, zu stabilisieren. Hierzu werden häufig in verschiedenen Richtungen verschiedene Monofile verwendet. Diese Trägermaterialien besitzen eine relativ hohe Steifigkeit, was die Verarbeitung deutlich erschwert. Des Weiteren ergeben sich durch die bisher verwendeten Monofile Rohgewebe, die keine gleichmäßige Dicke über das gesamte Gewebe aufweisen und einen aufwendigen Kalandrierprozess, d.h. eine plastische Verformung wie bspw. in EP 1 688 278 A1 beschrieben, notwendig machen. Aufgrund des hohen Durchgriffs auch nach dem Kalandrieren wird zur Herstellung eines mehrschichtigen Artikels auf der Ober- und Unterseite des Artikels sehr viel Polymermaterial benötigt, um eine ausreichend dicke Beschichtung zu erhalten, was wiederum zu einem erhöhten Gesamtgewicht des Artikels führt.

Der Erfindung liegt nun die Aufgabe zu Grunde, einen mehrschichtigen Artikel, insbesondere einen Faltenbalg, bereitzustellen, der sich durch ein geringeres Gewicht auszeichnet und bei dem das textile Flächengebilde nicht kalandriert ist. Des Weiteren soll der mehrschichtige Artikel einfacher herzustellen sein, da das textile Flächengebilde vor der Fertigstellung des mehrschichtigen Artikels eine geringere Steifheit aufweist.

Gelöst wird diese Aufgabe dadurch, dass der mehrschichtige Artikel wenigstens ein textiles Flächengebilde enthält, wobei das textile Flächengebilde aus wenigstens einem Multifilamentgarn aufgebaut ist, welches Filamente mit Kern/Mantel-Struktur enthält und dass er wenigstens eine weitere Schicht aus wenigstens einem polymeren Werkstoff enthält, wobei der polymere Werkstoff der weiteren Schicht ein elastomerer Werkstoff auf der Basis einer vulkanisierten Kautschukmischung ist, die eine unverschnittene Kautschukkomponente oder einen Kautschukkomponentenverschnitt und übliche Mischungsingredienzien enthält.

Gemäß DIN 60900_01:1988 wird als Garn ein linienförmiges Gebilde bezeichnet, welches aus textilen Faserstoffen (Spinnfasern, Filamente oder Bändchen) hergestellt ist, als Monofil wird ein Garn aus einem Filament (Endlosfaser) mit einem Durchmesser bis etwa 0,1mm bezeichnet, während als Filamentgarn ein Garn aus einem Filament (= Monofilamentgarn) oder mehreren Filamenten (= Multifilamentgarn) jeweils mit oder ohne Drehung bezeichnet wird, wobei die einzelnen Filamente einen Durchmesser bis etwa 0,1mm haben können. Die Begriffe Monofil und Monofilamentgarn können daher für einfädige, praktisch endlose Fasern synonym verwendet werden.
Filamente mit Kern/Mantel-Struktur werden häufig auch als Bikomponentenfasern bezeichnet, da die Materialien (Komponenten) für den Kern und den Mantel chemisch und / oder physikalisch und / oder strukturell voneinander verschieden sein müssen, wie bspw. in DE10249585A1 beschrieben.
Die Filamente mit Kern/Mantel-Struktur können verschiedenartige Querschnitte und Profile aufweisen, wodurch gezielte Fasereigenschaften eingestellt werden können.

Überaschenderweise wurde festgestellt, dass sich durch Verwendung eines textilen Flächengebildes, welches aus wenigstens Multifilamentgarn aufgebaut ist, welches Filamente mit Kern/Mantel-Struktur enthält, der Herstellprozess des mehrschichtigen Artikels deutlich optimieren lässt, insbesondere da der aufwendige Kalandrierprozess entfällt und die Steifigkeit des textilen Flächengebildes geringer ist. Gleichzeitig wird der Artikel leichter, was bspw. bei Verwendung des Artikels als Faltenbalg in Kraftfahrzeugen eine Kraftstoffeinsparung und eine Verringerung des CO₂-Ausstosses bewirkt.

Das textile Flächengebilde kann hierbei als Filz, Vlies, Gewebe, Geflecht, Gewirk oder Gestrick, Gelege ausgebildet sein. Es handelt sich bevorzugt um Webware (engl. woven fabric), bei der die Fläche durch Verkreuzen von zwei Fadensystemen, nämlich Kette und Schuß, hergestellt wird, oder um eine Maschenware (engl. knitted fabric), bei denen eine mittels Faden gebildete Schleife in eine andere Schleife hineingeschlungen ist und wobei die auf diese Weise entstehenden Maschen unter Verwendung eines oder mehrerer Fäden gebildet werden können. Es kann sich aber auch um so genannte nonwoven fabrics, d.h. um Vliese, Vliesstoffe oder Filze handeln, bei denen im Vergleich zu woven oder knitted fabrics die Zwischenstufe des Garns entfällt.

Als Materialien für den Kern und / oder den Mantel des Filaments können alle der fachkundigen bekannten und geeigneten Materialien verwendet werden.
Das Multifilament kann teilweise oder vollständig aus Filamenten mit Kern/Mantel-Struktur bestehen. Besonders gute Ergebnisse hinsichtlich der gleichmäßigen

Rohgewebedicke lassen sich erzielen, wenn es vollständig aus Filamenten mit Kern/Mantel-Struktur besteht.
Das erfindungsgemäße textile Flächengebilde zeichnet sich durch eine gleichmäßige Dicke und Oberfläche des Rohgewebes aus, welches zum einen den zusätzlichen Kalandrierprozess überflüssig macht und zum anderen die Möglichkeit bietet, die Schichtdicken der Polymerbeschichtung zu reduzieren.
Das textile Flächengebilde verhält sich vor der Vulkanisation wie eines, welches aus Multifilamentgarnen besteht, welche zunächst einen ungleichmäßigen eher ovalen Querschnitt aufweisen. Nach der Vulkanisation verhält sich das textile Flächengebilde vorteilhafterweise so, als ob es aus Monofilen aufgebaut ist, welche einen ideal runden Querschnitt besitzen und so eine gleichmäßige Dicke und Homogenität des Endproduktes ermöglichen.

Die Materialien für den Mantel des Filaments mit Kern/Mantel-Struktur sind dabei bevorzugt ausgewählt aus der Gruppe enthaltend: Polyamid (PA), z.B. PA6, PA6.6, PA11, PA 12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder m-Aramid und / oder p-Aramid und / oder Glas und / oder Basalt und / oder Metall und / oder Kohlenstoff und / oder Wolle und / oder Baumwolle und / oder Polypropylen und / oder Melamin und / oder Fluorpolymere, wie bspw. Fluorsilikon, Polytetrafluorethylen (PTFE) und Perfluorethylenpropylen (FEP), und /oder Fluor-Copolymere, wie bspw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Die Materialien für den Kern des Filaments mit Kern/Mantel-Struktur sind dabei bevorzugt ausgewählt aus der Gruppe enthaltend: Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder m-Aramid und / oder p-Aramid und / oder Glas und / oder Basalt und / oder Metall und / oder Kohlenstoff und / oder Melamin und / oder Fluorpolymere, wie bspw. Fluorsilikon, Polytetrafluorethylen (PTFE) und Perfluorethylenpropylen (FEP), und /oder Fluor-Copolymere, wie bspw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Wie bereits oben erwähnt müssen sich die Materialien für den Kern und den Mantel chemisch und / oder physikalisch und / oder strukturell voneinander unterscheiden. Vorteilhaft ist es, wenn das Material des Kerns einen höheren Schmelzpunkt besitzt als das Material des Mantels. Besonders vorteilhafterweise liegt der Schmelzpunkt des Mantelmaterials hierbei im Bereich der Vulkanisationstemperatur, d.h. zwischen 120 und 190°C, bevorzugt zwischen 120 und 160°C.
Während der Vulkanisation des mehrschichtigen Artikels ergibt sich die Formgebung über den plastischen Anteil des niedriger schmelzenden Materials, welches dadurch den Haftverbund zu den darüber- und / oder darunterliegenden Elastomerschichten bildet.

Zusätzliche Haftvermittler sind dann nicht mehr notwendig, was zu einer weiteren Erniedrigung der Komplexität im Produktionsprozess führt. Wie bereits erwähnt, verhält sich das Multifilamentgarn nach der Vulkanisation wie ein Monofil, was sich insbesondere auch auf das Steifigkeitsverhalten positiv auswirkt.
Als besonders gut geeignet, insbesondere zur Verwendung in Faltenbälgen, hat sich ein Multifilamentgarn erwiesen, welches aus Kern/Mantel-Filamenten aufgebaut ist, die als Kern PES mit einem Schmelzpunkt größer 220°C und als Mantel PES mit einem Schmelzpunkt zwischen 120 und 190°C enthalten.
Die Anzahl der Filamente in dem Multifilamentgarn ist hierbei abhängig von den verwendeten Materialien und Anforderungen. Bei Verwendung von Kern/Mantel-Filamenten aus höherschmelzendem PES-Kern und niedriger schmelzendem PES-Mantel hat das Multifilamentgarn bevorzugt 1100 dtex. Es ist aber auch möglich, dass das Multifilamentgarn, abhängig von den verwendeten Materialien, dtex-Werte zwischen 20 und 2200 aufweisen kann.

Der mehrschichtige Artikel enthält neben dem textilen Flächengebilde noch wenigstens eine weitere Schicht. Hierbei kann es sich um weitere textile und / oder polymere Schichten handeln. Es können daher auch mehrere textile Flächengebilde, die gleich oder verschieden voneinander sein können, vorhanden sein.

Erfindungsgemäß ist wenigstens eine weitere Schicht aus wenigstens einem polymerenWerkstoff enthalen, wobei der polymere Werkstoff der weiteren Schicht ein elastomerer Werkstoff auf der Basis einer vulkanisierten Kautschukmischung, die eine unverschnittene Kautschukkomponente oder einen Kautschukkomponentenverschnitt und übliche Mischungsingredienzien enthält, ist. Als Kautschukkomponenten sind insbesondere zu nennen: Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Poyurethan (PU).
Auch der Einsatz eines Verschnittes, insbesondere in Verbindung mit einem der vorgenannten Kautschuktypen, beispielsweise ein NR/BR-Verschnitt, ist möglich.

Von besonderer Bedeutung, insbesondere für Faltenbälge, sind CSM, EPDM, oder Silikonkautschuk. Insbesondere eine Silikonkautschukmischung oder eine Mischung auf Basis EVA kann hierbei transluzent ausgestaltet sein.

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoff (z.B. Farbpigmente). Diesbezüglich wird auf den allgemeinen Stand der Kautschukmischungstechnologie verwiesen.

Der polymere Werkstoff kann ebenso ein thermoplastisches Vulkanisat (thermoplastisches Elastomer, Kurzbezeichnung TPE), enthaltend wenigstens eine Thermoplastkomponente, wenigstens eine Kautschukkomponente, die zumindest teilvernetzt ist, sowie übliche Mischungsingredienzien, sein. Bevorzugte Thermoplastkomponenten sind hierbei: Polyolefin, insbesondere Polyethylen (PE) oder Polypropylen (PP), und / oder Polystyrol und / oder Polyamid (PA), beispielsweise PA6 oder PA6.6, und / oder Polyester (PES) Als Kautschukkomponenten sind insbesondere EPM, EPDM, CSM, EVA oder Silikonkautschuk zu nennen, die insbesondere mit keiner weiteren Kautschukkomponente verschnitten sind.

Der erfindungsgemäße mehrschichtige Artikel kann ein flexibler Behälter, ein Schutzanzug, eine Rettungsinsel, ein schlauchförmige Körper, insbesondere ein Schlauch oder ein Luftfederbalg, ein Antriebsriemen, ein Drucktuch, ein Fördergurt oder ein Faltenbalg sein. Bevorzugt handelt es sich allerdings bei dem mehrschichtigen Artikel um einen Faltenbalg, wie er bevorzugt in Gelenkfahrzeugen als Übergangsschutz eingesetzt wird.

Die Erfindung wird nun anhand von Ausführungsbeispielen unter Bezugnahme auf schematische Zeichnungen erläutert.

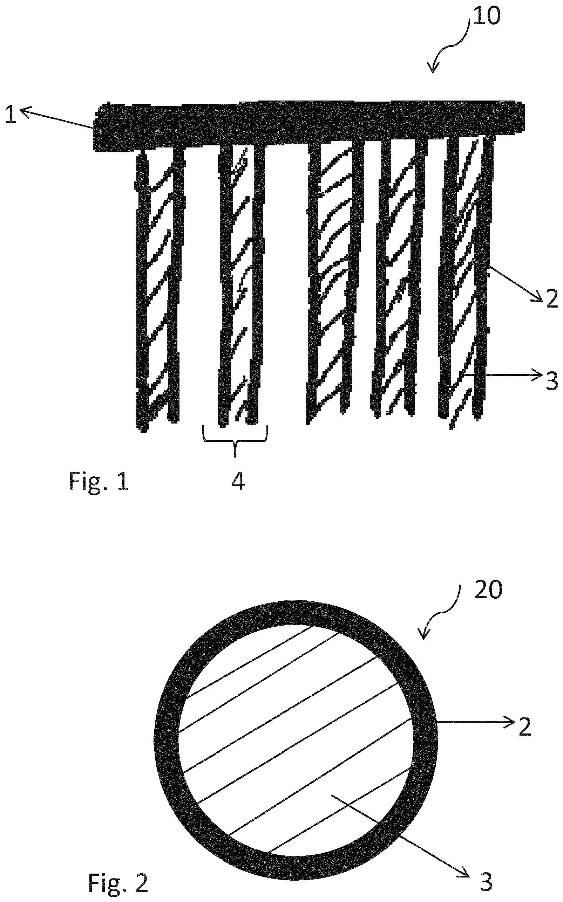

Fig.1 zeigt einen Ausschnitt Spinndüse 1 mit Bohrungen für die Anzahl der Filamente, die für einen bestimmten Titer, wie z.B.1100dtex, benötigt wird. Aus der Spinndüse 1 treten Filamente 4 mit Kern/Mantel-Struktur heraus. Das Material des Kerns 3 hat hierbei einen höheren Schmelzpunkt als das Material des Mantels 2.
Fig. 2 zeigt einen Querschnitt durch ein Filament 20 mit Kern/Mantel-Struktur. Das Material des Kerns 3 ist hierbei verschieden von dem Material des Mantels 2.

### Bezugszeichenliste (Teil der Beschreibung)

- 10: Ausschnitt aus einer Spinndüse
- 20: Querschnitt durch ein Filament mit Kern/Mantel-Struktur
- 1: Spinndüse
- 2: Mantel des Filaments mit Kern/Mantel-Struktur
- 3: Kern des Filaments mit Kern/Mantel-Struktur
- 4: Filament mit Kern/Mantel-Struktur

## Patentansprüche

1. Mehrschichtiger Artikel enthaltend wenigstens ein textiles Flächengebilde, **dadurch gekennzeichnet, dass das** textile Flächengebilde aus wenigstens einem Multifilamentgarn aufgebaut ist, welches Filamente (4) mit Kern/Mantel-Struktur enthält, und dass er wenigstens eine weitere Schicht aus wenigstens einem polymeren Werkstoff enthält, wobei der polymere Werkstoff der weiteren Schicht ein elastomerer Werkstoff auf der Basis einer vulkanisierten Kautschukmischung ist, die eine unverschnittene Kautschukkomponente oder einen Kautschukkomponentenverschnitt und übliche Mischungsingredienzien enthält.

2. Mehrschichtiger Artikel nach Anspruch 1, **dadurch gekennzeichnet, dass** das Material für den Kern (3) des Filaments (4) mit Kern/Mantel-Struktur bevorzugt ausgewählt ist aus der Gruppe enthaltend, Polyamid (PA) und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder m-Aramid und / oder p-Aramid und / oder Glas und / oder Basalt und / oder Metall und / oder Kohlenstoff und / oder Melamin und / oder Fluorpolymere und /oder Fluor-Copolymere.

3. Mehrschichtiger Artikel nach Anspruch 1 oder 2, **dadurch gekennzeichnet, dass** das Material für den Mantel (2) des Filaments (4) mit Kern/Mantel-Struktur bevorzugt ausgewählt ist aus der Gruppe enthaltend, Polyamid (PA) und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder m-Aramid und / oder p-Aramid und / oder Glas und / oder Basalt und / oder Metall und / oder Kohlenstoff und / oder Wolle und / oder Baumwolle und / oder Polypropylen und / oder Melamin und / oder Fluorpolymere und /oder Fluor-Copolymere.

4. Mehrschichtiger Artikel nach einem der Ansprüche 1 bis 3, **dadurch gekennzeichnet, dass** das Material für den Kern (3) des Filaments (4) mit Kern/Mantel-Struktur ein Polyester mit einem Schmelzpunkt von größer 220°C ist.

5. Mehrschichtiger Artikel nach einem der Ansprüche 1 bis 4, **dadurch gekennzeichnet, dass** das Material für den Mantel (2) des Filaments (4) mit Kern/Mantel-Struktur ein Polyester mit einem Schmelzpunkt von kleiner oder gleich 190°C ist.

6. Mehrschichtiger Artikel nach einem der Ansprüche 1 bis 5, **dadurch gekennzeichnet, dass** das textile Flächengebilde ein Gewebe ist.

7. Mehrschichtiger Artikel nach einem der Ansprüche 1 bis 6, **dadurch gekennzeichnet, dass** dieser ein flexibler Behälter, ein Schutzanzug, eine Rettungsinsel, ein schlauchförmiger Körper, insbesondere ein Schlauch oder ein Luftfederbalg, ein Antriebsriemen, ein Fördergurt, ein Drucktuch oder ein Faltenbalg ist.

8. Mehrschichtiger Artikel nach Anspruch 7, **dadurch gekennzeichnet, dass** dieser ein Faltenbalg ist.

## Claims

1. Multilayer item comprising at least one textile sheet, **characterized in that** the textile sheet is composed of at least one multifilament yarn which comprises filaments (4) with core/sheath structure, and that the said item comprises at least one further layer made of at least one polymeric material, where the polymeric material of the further layer is an elastomeric material based on a vulcanized rubber mixture, and the said mixture comprises an unblended rubber component or a rubber component blend and conventional mixture ingredients.

2. Multilayer item according to Claim 1, **characterized in that** the material for the core (3) of the filament (4) with core/sheath structure is preferably selected from the group comprising polyamide (PA) and/or copolyamides and/or polyester (PES) and/or rayon and/or polyethylene terephthalate (PET) and/or polyethylene naphthalate (PEN) and/or polybutylene terephthalate (PBT) and/or polycarbonate (PC) and/or unsaturated polyester resin (UP) and/or poly(1,4-cyclohexanedimethylene terephthalate) (PCDT) and/or cotton and/or spun cellulose fibre and/or polyvinyl alcohol (PVAL) and/or polyoxybenzonaphthoate and/or polyvinyl acetal (PVA) and/or polyetheretherketone (PEEK) and/or polyethylene 2,6-naphthalate (PEN) and/or polyphenylene and/or polyphenylene oxide (PPO) and/or polyphenylene sulphide (PPS) and/or polyphenylene ether and/or polybenzoxazole (PBO) and/or m-aramid and/or p-aramid and/or glass and/or basalt and/or metal and/or carbon and/or melamine and/or fluoropolymers and/or fluorocopolymers.

3. Multilayer item according to Claim 1 or 2, **characterized in that** the material for the sheath (2) of the filament (4) with core/sheath structure is preferably selected from the group comprising polyamide (PA) and/or copolyamides and/or polyester (PES) and/or rayon and/or polyethylene terephthalate (PET) and/or polyethylene naphthalate (PEN) and/or polybutylene terephthalate (PBT) and/or polycarbonate (PC) and/or unsaturated polyester resin (UP) and/or poly(1,4-cyclohexanedimethylene terephthalate) (PCDT) and/or cotton and/or spun cellulose fibre and/or polyvinyl alcohol (PVAL) and/or polyoxybenzonaphthoate and/or polyvinyl acetal (PVA) and/or polyetheretherketone (PEEK) and/or polyethylene 2,6-naphthalate (PEN) and/or polyphenylene and/or polyphenylene oxide (PPO) and/or polyphenylene sulphide (PPS) and/or polyphenylene ether and/or polybenzoxazole (PBO) and/or m-aramid and/or p-aramid and/or glass and/or basalt and/or metal and/or carbon and/or wool and/or cotton and/or polypropylene and/or melamine and/or fluoropolymers and/or fluorocopolymers.

4. Multilayer item according to any of Claims 1 to 3, **characterized in that** the material for the core (3) of the filament (4) with core/sheath structure is a polyester with melting point above 220°C.

5. Multilayer item according to any of Claims 1 to 4, **characterized in that** the material for the sheath (2) of the filament (4) with core/sheath structure is a polyester with melting point equal to or below 190°C.

6. Multilayer item according to any of Claims 1 to 5, **characterized in that** the textile sheet is a woven fabric.

7. Multilayer item according to any of Claims 1 to 6, **characterized in that** it is protective apparel, a flexible container, a life raft, a tubular body, in particular a hose or an air spring bellows, a drive belt, a conveyor belt, a printing blanket or a folding bellows.

8. Multilayer item according to Claim 7, **characterized in that** it is a folding bellows.

## Revendications

1. Article multicouche contenant au moins une structure plate textile, **caractérisé en ce que** la structure plate textile est formée à partir d'au moins un fil multifilamentaire, qui contient des filaments (4) à structure noyau/enveloppe, et **en ce qu'**il contient au moins une couche supplémentaire en au moins un matériau polymère, le matériau polymère de la couche supplémentaire étant un matériau élastomère à base d'un mélange de caoutchouc vulcanisé, qui contient un composant caoutchoutique non coupé ou une coupe de composant caoutchoutique et des ingrédients de mélange usuels.

2. Article multicouche selon la revendication 1, **caractérisé en ce que** le matériau pour le noyau (3) du filament (4) à structure noyau/enveloppe est de préférence choisi dans le groupe contenant le polyamide (PA) et/ou les copolyamides et/ou les polyesters (PES) et/ou la rayonne et/ou le polyéthylène téréphtalate (PET) et/ou le polyéthylène naphtalate (PEN) et/ou le polybutylène téréphtalate (PBT) et/ou le polycarbonate (PC) et/ou une résine de polyester insaturée (UP) et/ou le poly(1,4-cyclohexane-diméthylène-téréphtalate) (PCDT) et/ou le coton et/ou la laine de cellulose et/ou l'alcool polyvinylique (PVAL) et/ou le polyoxybenzonaphtoate et/ou le polyvinylacétal (PVA) et/ou la polyéther-éther-cétone (PEEK) et/ou le polyéthylène-2,6-naphtalate (PEN) et/ou le polyphénylène et/ou le polyoxyde de phénylène (PPO) et/ou le polysulfure de phénylène (PPS) et/ou le polyéther de phénylène et/ou le polybenzoxazole (PBO) et/ou le m-aramide et/ou le p-aramide et/ou le verre et/ou le basalte et/ou le métal et/ou le carbone et/ou la mélamine et/ou les polymères fluorés et/ou les copolymères fluorés.

3. Article multicouche selon la revendication 1 ou 2, **caractérisé en ce que** le matériau pour l'enveloppe (2) du filament (4) à structure noyau/enveloppe est de préférence choisi dans le groupe contenant le polyamide (PA) et/ou les copolyamides et/ou les polyesters (PES) et/ou la rayonne et/ou le polyéthylène téréphtalate (PET) et/ou le polyéthylène naphtalate (PEN) et/ou le polybutylène téréphtalate (PBT) et/ou le polycarbonate (PC) et/ou une résine de polyester insaturée (UP) et/ou le poly(1,4-cyclohexane-diméthylène-téréphtalate) (PCDT) et/ou le coton et/ou la laine de cellulose et/ou l'alcool polyvinylique (PVAL) et/ou le polyoxybenzonaphtoate et/ou le polyvinylacétal (PVA) et/ou la polyéther-éther-cétone (PEEK) et/ou le polyéthylène-2,6-naphtalate (PEN) et/ou le polyphénylène et/ou le polyoxyde de phénylène (PPO) et/ou le polysulfure de phénylène (PPS) et/ou le polyéther de phénylène et/ou le polybenzoxazole (PBO) et/ou le m-aramide et/ou le p-aramide et/ou le verre et/ou le basalte et/ou le métal et/ou le carbone et/ou la laine et/ou le coton et/ou le polypropylène et/ou la mélamine et/ou les polymères fluorés et/ou les copolymères fluorés.

4. Article multicouche selon l'une quelconque des revendications 1 à 3, **caractérisé en ce que** le matériau pour le noyau (3) du filament (4) à structure noyau/enveloppe est un polyester ayant un point de fusion supérieur à 220 °C.

5. Article multicouche selon l'une quelconque des revendications 1 à 4, **caractérisé en ce que** le matériau pour l'enveloppe (2) du filament (4) à structure noyau/enveloppe est un polyester ayant un point de fusion inférieur ou égal à 190 °C.

6. Article multicouche selon l'une quelconque des revendications 1 à 5, **caractérisé en ce que** la structure plate textile est un tissu.

7. Article multicouche selon l'une quelconque des revendications 1 à 6, **caractérisé en ce que** celui-ci est un contenant flexible, une combinaison de protection, un radeau de sauvetage, un corps en forme de tuyau, notamment un tuyau ou un soufflet pneumatique, une courroie d'entraînement, une bande transporteuse, un blanchet ou un soufflet.

8. Article multicouche selon la revendication 7, **caractérisé en ce que** celui-ci est un soufflet.
